# EUROPEAN PATENT APPLICATION

(11) **EP 1 510 706 A2**
(43) Date of publication of application: **02.03.2005**
(21) Application number: 04254751.3
(22) Date of filing: 06.08.2004
(51) Int. Cl.: F16C 19/36, F16C 33/58

(54) **Tapered roller bearing for automobile transmission**

(30) Priority: 28.08.2003 JP 2003304699
(71) Applicant: NTN CORPORATION, Osaka-shi, Osaka-fu (JP)
(72) Inventor: Tsujimoto, Takashi, NTN Corporation, Iwata-shi, Shizuoka-ken (JP)
(74) Representative: White, Duncan Rohan

(57) **Abstract**

The present invention provides a tapered roller bearing for an automobile transmission that is capable of preventing early surface originating flaking attributable to lack of oil film even when the oil film parameter Λ is in the range of 0.8 or less. Further, in a tapered roller bearing for an automobile transmission to be used with an oil film parameter A being equal to or more than 0.5, the roughness of the raceway surfaces (1, 3) of both the inner and outer rings (6, 2) is rendered less than twice the roughness of the rolling contact surface of a roller (7).

## Description

### BACKGROUND OF THE INVENTION

### 1. Field of the Invention

The present invention relates to a tapered roller bearing for an automobile transmission.

### 2. Description of the Related Art

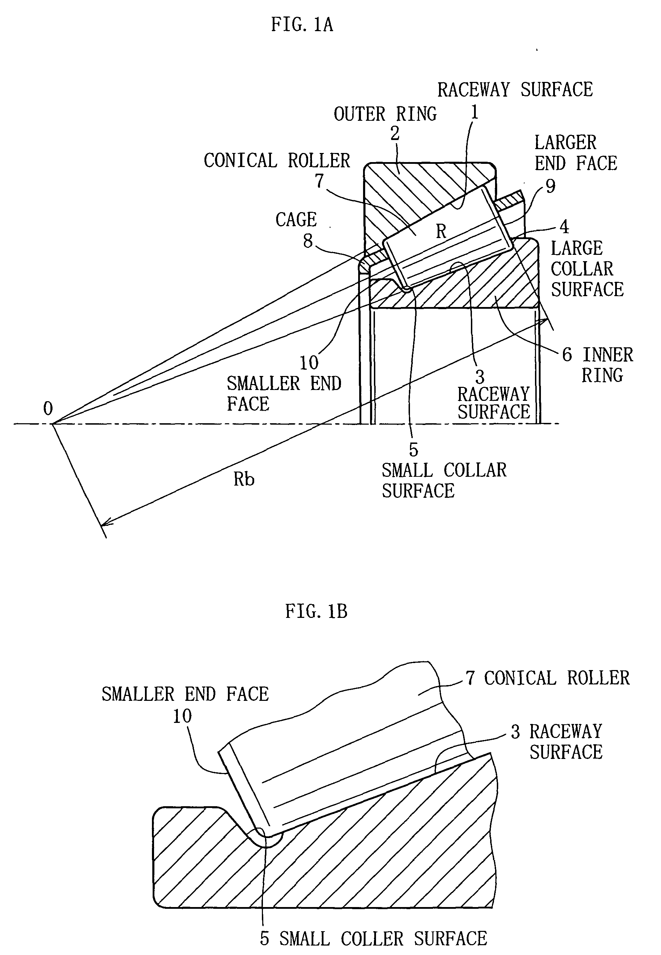

A tapered roller bearing is used in a shaft support part of the input/output shaft of an automobile transmission. This tapered roller bearing, for example, as shown in Fig. 1, comprises an outer ring 2 having a tapered raceway surface 1, an inner ring 6 having a tapered raceway surface 3 and provided with a large rib surface 4 on the larger diameter side of the raceway surface 3 and with a small rib surface 5 on the smaller diameter side thereof, a plurality of tapered rollers 7 which are rollably arranged between the raceway surfaces 1 and 3 of the outer ring 2 and the inner ring 6, and a cage 8 which holds the tapered rollers 7 such that they are arranged at predetermined even intervals in the circumferential direction. The distance between the large rib surface 4 and the small rib surface 5 of the inner ring 6 is designed to be slightly longer than the length of the tapered roller 7.

Each of the tapered rollers 7 is designed such that it makes line contact with the raceway surfaces 1 and 3 of the outer ring 2 and the inner ring 6, and the vertexes of the respective cone angles of the tapered roller 7 and the raceway surfaces 1 and 3 match at a single point O on the center line of the tapered roller bearing. Thereby, the tapered roller bearings 7 are enabled to perform rolling movement along the raceway surfaces 1 and 3.

Since the raceway surfaces 1 and 3 of the tapered roller bearing have different cone angles, the resultant of the loads applied to the tapered rollers 7 from the raceway surfaces 1 and 3 acts in the direction to push the tapered roller 7 to the side of the large rib surface 4 of the inner ring 6. Therefore, during the operation of the bearing, each of the tapered rollers 7 is guided with its larger end face 9 pressed against the large rib surface 4, so that the larger end face 9 makes slide contact with the large rib surface 4. On the other hand, since the distance between the large rib surface 4 and the small rib surface 5 of the inner ring 6 is slightly longer than the length of the tapered roller 7, as shown in the enlarged view in Fig. 1(b), the small rib surface 5 does not make contact with the smaller end face 10 of the tapered roller 7, and there is a small clearance therebetween. The small rib surface 5 is constituted by a plane slightly inclined outward with respect to the smaller end face 10 of the tapered roller 7.

Pre-load is exerted axially to the tapered roller bearing for the purpose of preventing, during the operation thereof, the tapered roller 7 from moving in the axial direction and assuring that the tapered rollers 7 makes stable line contact with the respective raceway surfaces 1 and 3 of the outer and inner rings 2 and 6. However, if so-called "galling" occurs on the rib surface due to a metal-to-metal contact between the large rib surface 4 and the larger end face 9 of the tapered roller 7 during use of the tapered roller bearing and due to a contact between the large rib surface 4 and the edge of the larger end face 9 during skewing of the tapered roller 7, this will cause a phenomenon called "loss in pre-load" where the pre-load drops gradually.

When the relationship between the pre-load and the life of the bearing is represented by a life ratio (L/L₀) (where L denotes a life when the clearance and pre-load are taken into consideration, and L₀ denotes a life when the clearance is zero), the life ratio (L/L₀) is equal to or more than 1 if there is exerted an appropriate magnitude of pre-load (when the axial clearance is in a negative range). However, when the axial clearance becomes zero and enters into a positive range, the loss in pre-load occurs and the life ratio drops gradually.

On the other hand, there recently has been a trend that low-viscosity oil is used for an automobile transmission for realizing automatic transmissions, CVTs, fuel economy, and so forth. If, in the environment where a low-viscosity oil is used, unfavorable conditions such as (1) high oil temperature, (2) low oil flow rate, (3) occurrence of loss in pre-load and so forth are present simultaneously, surface originating flaking may occur after a very short period of use due to poor lubrication (lack of oil film) at the inner raceway surface that is under high contact pressure.

Under normal use conditions of a roller bearing, the oil film parameter Λ is mostly in the range of 0.8 to 3.0. Here, the oil film parameter Λ is calculated by the formula Λ = hₘᵢₙ/(R₁ᵣₘₛ²+R₂ᵣₘₛ²)1/2. In the formula, "hₘᵢₙ" is a minimum oil film thickness calculated by Dowson-Higginson and Hamrock-Dowson formulas, "R₁ᵣₘₛ"is a root mean square roughness of the raceway surface of a ring, and "R₂ᵣₘₛ" is a root mean square roughness of the rolling contact surface of a rolling element.

It is believed that, the surface damage will occur if the oil film parameter Λ is in the range of 0.8 (exclusive) to 1.5 and slippage is high, whereas if the oil film parameter Λ is equal to or less than 0.8, the surface damage will occur regardless of whether slippage is high or not. Generally, the oil film parameter Λ generally becomes smaller as the roughness becomes larger, which adversely affect the life of bearings. In tapered roller bearings, since the rolling contact surface of a roller is ground by a relatively large grinder at a high circumferential working speed, it is easy to secure favorable roughness.
In contrast, the roughness of the raceway surfaces of inner and outer rings is significantly larger than that of the rolling contact surface of the roller, partly because the difference in method of working them. That is also because the roughness of the raceway surfaces of inner and outer rings is intentionally made larger than that of the surface roughness of the roller for the purpose of giving priority to skew control.

Japanese Patent Laid-Open Publication No. 2000-179559 (refer to Patent Literature 1 hereinafter) discloses means for preventing the peeling damage or other problems caused by bearing behaviors such as skew, skidding, and the like during the bearing operation. According to the invention disclosed therein, the surface of an inner ring is treated by the carbonitriding or other similar method so that the frictional coefficient between the inner ring and the rolling element is comparatively smaller than that between the outer ring and the rolling element (no less than 0.8 but less than 1.0 in terms of the ratio) to suppress irregular behaviors of bearings, namely skew for roller bearings and spinning for ball bearings. Further, the roughness is kept relatively small to make the oil film parameter large and thereby the decrease of the life of the bearing is prevented. At the same time, compressive residual stress is applied to the inner ring to enhance the strength of the inner ring against cracking. In this manner, the rolling fatigue life is extended by treating the surface of the inner ring, where the maximum contact pressure is large, with the carbonitriding or other similar method to increase the surface hardness thereof. In practice, however, the measures taken by the aforementioned invention is effective only in the case when the oil film parameter Λ is more than 0.8, and no such effects as mentioned in the above can be expected when the oil film parameter Λ is a range of 0.8 or less (refer to claim 1 of Patent Literature 1).

In the environment where a low-viscosity oil is used for an automobile transmission, as mentioned in the above, surface originating flaking may occur after a very short period of use due to poor lubrication (lack of oil film) at the inner raceway surface that is under high contact pressure. Such surface originating flaking often occurs under lubricating conditions of a low oil film parameter Λ, because the roller rolling contact surface, that has a relatively small roughness, is damaged by the raceway surfaces of the inner and outer rings having a relatively large roughness. In high-precision bearings in recent years, such trouble is apt to occur when the oil film parameter Λ is the range of 0.8 or less, and it is difficult for the invention disclosed in the aforementioned Patent Literature 1 to cope with the trouble when the oil film parameter Λ is in this range. Therefore, there has been a demand for novel means of extending the life of bearings.

### SUMMARY OF THE INVENTION

In view of the foregoing circumstances, the present invention intends to provide a tapered roller bearing for an automobile transmission that is capable of preventing surface originating flaking from occurring after a short period of use due to loss of oil film, even with the oil film parameter Λ being in the range of 0.8 or less, by optimizing the balance in roughness between the raceway surfaces of the inner and outer rings and the roller rolling contact surface of the bearing.

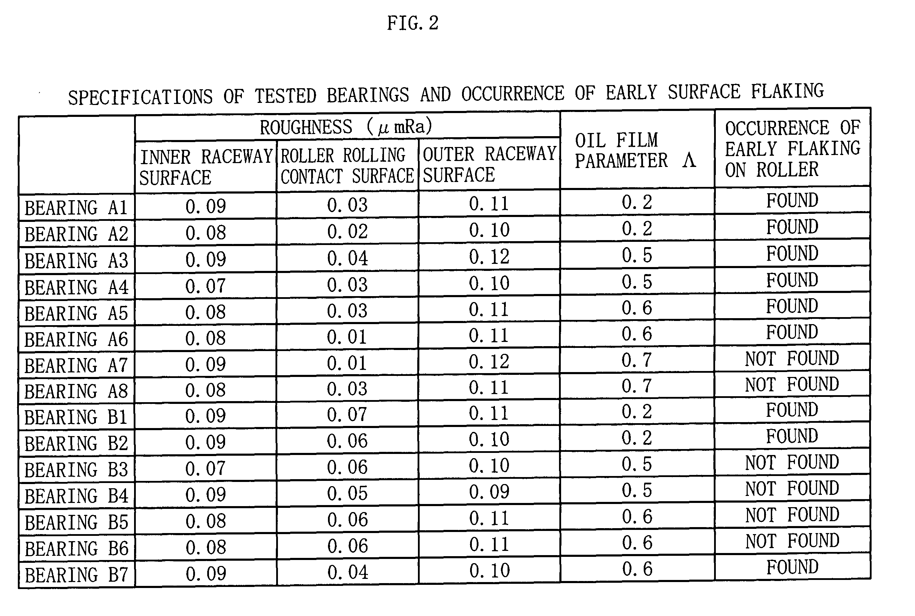

A tapered roller bearing for an automobile transmission according to the present invention is one used with the oil film parameter Λ being equal to or more than 0.5, wherein the raceway surface roughness of both the inner and outer rings is less than twice the roughness of the roller rolling contact surface. Fig. 2 shows the results of early surface flaking tests conducted using 15 types of tapered roller bearings with varied roughness of the raceway surfaces of inner and outer rings and of the roller rolling contact surfaces whilst the oil film parameter Λ is set in the range of 0.2 to 0.7. The tests were carried out with the maximum contact pressure of the raceway surfaces fixed to 2900 MPa and the axial clearance fixed to 0.3mm. The flaking time of early flaking of a roller is an average of 60 hours, while the life of the roller which has not suffered from early flaking is 200 hours or more. In other words, the life time of a roller which has suffered from the surface originating flaking is one-third or less when compared to a roller which has not suffered from the surface originating flaking.

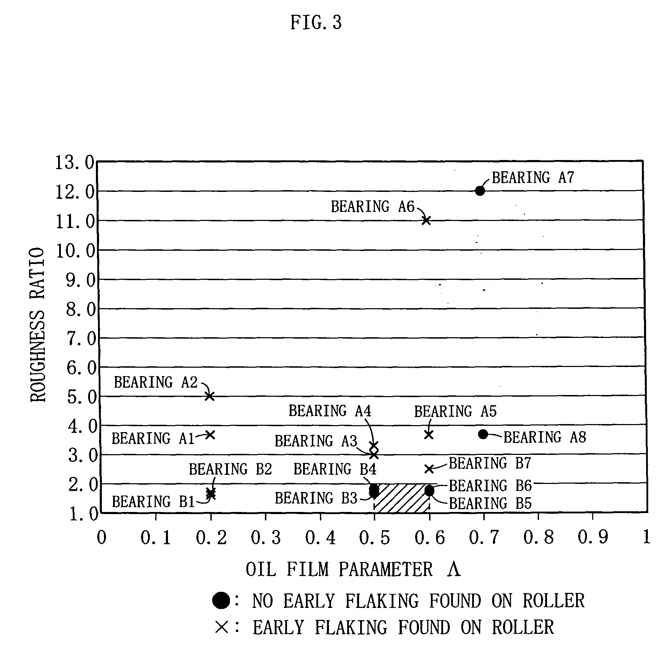

The ratio of the raceway surface roughness of the inner and outer rings to the roller rolling contact surface roughness (hereinafter, to be referred to as "roughness ratio") is in the range of 1.6 to 12.0 as shown in Fig. 3. As seen from Fig. 2 and Fig. 3, six bearings B3-B6 with the roughness ratio of 2.0 or less and the oil film parameter Λ in the range of 0.5 to 0.6 (the hatched region in Fig. 3)caused no early surface flaking, whereas those other bearings with the roughness ratio of 2.5 or more caused early surface flaking. Also, the bearings B1 and B2, the roughness ratio of which was 2.0 or less but the oil film parameter Λ of which was 0.2, caused early surface flaking. It should be noted that the roughness ratios in Fig. 3 were obtained by calculation based on the roughness of either the inner or outer ring whichever was higher.

As proved by the test results, even if unfavorable conditions such as (1) oil temperature being high, (2) lubricating oil feed rate being as low as less than 100 mL/min, for example, (3) occurrence of loss in pre-load and so forth are present simultaneously in the environment where a low-viscosity oil is used and thereby the oil film parameter becomes 0.8 or less, the present invention can prevent the early flaking as long as the oil film parameter Λ is maintained at at least 0.5.

In these tests, the oil film parameter was used as the parameter for representing levels of poor lubrication and each test was performed under the condition where a sufficient amount of lubricating oil was present. On the other hand, it was also found that, even if the speculative oil film parameter was 0.6 or greater, damages such as surface flaking would be caused when the amount of lubricating oil became low. It is believed that this is because lack of oil film occurs locally due to the insufficient amount of lubricating oil. It is known that actual tapered roller bearings for a transmission having an inner diameter of about 20 to 45 mm tend to cause a trouble attributable to poor lubrication when the feed rate of lubricating oil drops to approximately 100 ml/min or less. For this reason, it is believed that the case of poor lubrication with the feed rate of lubricating oil of approximately 100 ml/min or less should also be treated likewise as the case of Λ being equal to or less than 0.6. It is known that the oil film thickness becomes larger in proportion to the kinematic viscosity of lubricating oil (the oil film thickness becomes larger also in proportion to rotational speed). If the oil film parameter Λ of a tapered roller bearing used in an automobile transmission is equal to or less than 0.6, for example, the kinematic viscosity of the lubricating oil during operation is equivalent to approximately 10 cst or less, and such tapered roller bearing will be able to operate satisfactorily with a low-viscosity oil that has recently been employed for realizing automatic transmissions, CVTs, fuel economy, and so forth.

According to the present invention, it is possible to prevent the surface originating flaking from occurring in rollers after a short period of use, as long as the oil parameter Λ is maintained at at least 0.5, even if the oil film parameter Λ has dropped to 0.8 or less due to the simultaneous occurrence of severe lubricating conditions such as (1) high oil temperature, (2) low flow rate of oil, and (3) occurrence of loss in pre-load.

### BRIEF DESCRIPTION OF THE DRAWINGS

Fig. 1(a) is a sectional view of a tapered roller bearing;
Fig. 1(b) is an enlarged view of a tapered roller;
Fig. 2 is a diagram showing results of early surface flaking tests conducted on tapered roller bearings; and
Fig. 3 is a diagram in which the results in Fig. 2 are plotted in the relationship between oil film parameter Λ and roughness ratio.

### DETAILED DESCRIPTION OF THE PREFERRED EMBODIMENTS

The present invention is a tapered roller bearing for an automobile transmission in which the roughness of both the raceway surfaces of the inner and outer rings is less than twice the roughness of the rolling contact surface of tapered rollers. The roughness ratios of the raceway surfaces of the inner and outer rings may be either same or different as long as they are less than 2.0, but it is desirable that the roughness ratios be same between the inner and outer rings. According to the present invention, even if the oil film parameter Λ drops to 0.8 or less due to the simultaneous occurrence of unfavorable conditions such as (1) high oil temperature, (2) low flow rate of oil, (3) occurrence of loss in pre-load and so forth, it is possible to prevent the surface originating flaking from occurring in rollers after a very short period of use due to poor lubrication (lack of oil film) on the inner raceway surface under high contact pressure, as long as the roughness ratios are maintained as described above and the oil film parameter Λ is maintained at at least 0.5.

## Claims

1. A tapered roller bearing for an automobile transmission to be used with an oil film parameter A being equal to or more than 0.5, wherein roughness of raceway surfaces (1, 3) of both inner and outer rings (6, 2) is less than twice the roughness of a rolling contact surface of a roller (7).

2. A tapered roller bearing according to claim 1, wherein each roughness of raceway surface (1, 3) of inner and outer rings (6, 2) is equal.
